# EUROPEAN PATENT SPECIFICATION

(11) **EP 1 872 534 B1**
(45) Date of publication and mention of the grant of the patent: **29.09.2010**
(21) Application number: 06721822.2
(22) Date of filing: 18.04.2006
(51) Int. Cl.: H04L 12/54

(54) **SYSTEM AND METHOD OF MESSAGE TRAFFIC OPTIMIZATION**
SYSTEM UND VERFAHREN FÜR NACHRICHTENVERKEHRSOPTIMIERUNG
SYSTEME ET PROCEDE D'OPTIMISATION DU TRAFIC DE MESSAGES

(30) Priority: 18.04.2005 US 672007 P
(43) Date of publication of application: 02.01.2008
(73) Proprietor: RESEARCH IN MOTION LIMITED, Waterloo, Ontario N2L 3W8 (CA)
(72) Inventor: BIBR, Viera, Kilbride, Ontario L0P 1G0 (CA); FRITSCH, Brindusa, Toronto, Ontario M9C 2J9 (CA); VITANOV, Kamen, Mississauga, Ontario L5M 6E8 (CA); KARMAKAR, Srimant, Mississauga, Ontario L5M 5W1 (CA); MATOVSKY, Michael, North York Ontario M2N 6Z9 (CA); GORING, Bryan, Milton, Ontario L9T 5V4 (CA)
(74) Representative: Patel, Binesh
(86) International application number: PCT/CA2006/000576
(87) International publication number: WO 2006/110997

(56) References cited:
- US-A1- 2001 055 317
- US-A1- 2003 169 769
- US-A1- 2003 231 625
- US-A1- 2004 122 902
- US-B1- 6 614 808
- CHETLUR M. ET AL.: 'Optimizing Communication in Time-Warp Simulators' PARALLEL AND DISTRIBUTED SIMULATION, 1998. PADS 98. PROCEEDINGS TWELFTH WORKSHOP 26 May 1998 - 29 May 1998, pages 64 - 71, XP010287298

## Description

The present patent disclosure relates generally to a communications system for providing communications to a plurality of devices and specifically to a system and method of optimization of message traffic between server and device.

### BACKGROUND OF THE INVENTION

Due to the proliferation of wireless networks, there are a continually increasing number of wireless devices in use today. These devices include mobile telephones, personal digital assistants (PDAs) with wireless communication capabilities, two-way pagers and the like. Concurrently with the increase of available wireless devices, software applications running on such devices have increased their utility. For example, the wireless device may include an application that retrieves a weather report for a list of desired cities or an application that allows a user to shop for groceries. These software applications take advantage of the ability to transmit data of the wireless network in order to provide timely and useful services to users, often in addition to voice communication. However, due to a plethora of different types of devices, restricted resources of some devices, and complexity of delivering large amounts of data to the devices, developing software applications remains a difficult and time-consuming task.

A wireless handheld device has limited battery power, memory and processing capacity. Since communication on a device is very expensive in terms of energy consumption, memory usage and bandwidth, it is desirable to minimize message traffic to and from the device as much as possible.

Transport layer protocols such as transmission control protocol (TCP) or stream control transmission protocol (SCTP) offer bundling of multiple packets behind a single Internet protocol (IP) header. However, it is desirable to reduce traffic without being dependent upon the transport or network layer. Other ways to reduce traffic include using fewer ACKs (fewer reliable messages), limiting messages by having fewer parameters in message/packet headers, or limiting messages to reduce transmission failures. It is desirable to reduce traffic without limiting message transmissions or reliability.

Techniques for optimizing communication in message passing environments have been developed for time-warp simulators. (CHETLUR M. et al.: "optimizing Communications in Time-Warp Simulators" PARALLEL AND DISTRIBUTED SIMULATION, 1998. PADS 98. PROCEEDINGS TWELFTH WORKSHOP 26 May 1998 - 29 May 1998, pages 64 - 71, XP010287298.

Techniques for combining together packets destined to a common destination have been described for network relay apparatuses such as routers. KAJIZAKI et al.: "Network Relay Apparatus and Method Of Combining Packets", US Pub. No. 2001/0055317.

### SUMMARY

The patent disclosure provides a mechanism to shift from the standard mode of transmitting individual messages into a mode of transmission that is more efficient. Bundling of messages may occur at the application level by a central messaging service.

In accordance with an embodiment of the present patent disclosure, there is provided a message traffic optimization system for reducing the size and quantity of messages. The message traffic optimization system comprises a message traffic analysis module for analyzing message headers belonging to a plurality of messages, and a message traffic grouping module for grouping the messages into a bundle.

In accordance with another embodiment of the present patent disclosure, there is provided a method of message traffic optimization for reducing the size and quantity of messages. The method comprises the steps of analyzing message headers belonging to a plurality of messages, and grouping the messages into a bundle.

In accordance with another embodiment of the present patent disclosure, there is provided a method of de-bundling message bundles. The method comprises the steps of obtaining the number of individual messages contained in the message bundle and for each individual message contained in the bundle: creating a new message, setting common headers of the new message using the common header values from the message bundle and setting a payload of the new message.

In accordance with another embodiment of the present patent disclosure, there is provided a method of preserving message causality order. The method comprises the steps of initializing a separate order message channel OMC for each set of causally related messages and for each set of causally related messages: starting a transaction for a target OMC, retrieving available messages, grouping the available messages into a resulting bundle, sending the resulting bundle to a device, receiving the delivery status of the bundle, committing the transaction in response to a successful delivery status, and rolling back the transaction in response to a non-successful delivery status.

In accordance with another embodiment of the present patent disclosure, there is provided a computer-readable medium storing instructions or statements for use in the execution in a computer of a method of message traffic optimization for reducing the size and quantity of messages. The method comprises the steps of analyzing message headers belonging to a plurality of messages and grouping the messages into a bundle.

In accordance with another embodiment of the present patent disclosure, there is provided a propagated signal carrier carrying signals containing computer-executable instructions that can be read and executed by a computer. The computer-executable instructions are used to execute a method of message traffic optimization for reducing the size and quantity of messages. The method comprises the steps of analyzing message headers belonging to a plurality of messages and grouping the messages into a bundle.

In accordance with another embodiment of the present patent disclosure, there is provided a message traffic optimization system for preserving message causality order. The message traffic optimization system comprises a message store for storing the messages, an ordered message channel for defining a message-ordering protocol on a set of causally related messages stored in the message store. The order message channel comprises: an order controller for retrieving causally related messages from the message store in an order, the causally related messages defined during the initialization of the ordered message channel, and a transaction controller for providing transactional support for retrieval of the causally related messages from the message store. The system further comprises a message traffic grouping module (804) for grouping the retrieved messages into a bundle.

In accordance with another embodiment of the present patent disclosure, there is provided a method of preserving message causality order. The method comprises the steps of initializing an ordered message channel for a set of causally related messages, starting a transaction for the ordered message channel, retrieving available causally related messages from a message store, grouping the retrieved messages into a bundle, sending the resulting bundle to a recipient, receiving the delivery status of the bundle sent to the recipient, in response to a successful delivery status, committing the transaction for the ordered message channel and in response to a non-successful delivery status, rolling back the transaction for the ordered message channel.

In accordance with another embodiment of the present patent disclosure, there is provided a computer-readable medium storing instructions or statements for use in the execution in a computer of a method of preserving message causality order. The method comprises the steps of initializing an ordered message channel for a set of causally related messages, starting a transaction for the ordered message channel, retrieving available causally related messages from a message store, grouping the retrieved messages into a bundle, sending the resulting bundle to a recipient, receiving the delivery status of the bundle sent to the recipient, in response to a successful delivery status, committing the transaction for the ordered message channel and in response to a non-successful delivery status, rolling back the transaction for the ordered message channel.

In accordance with another embodiment of the present patent disclosure, there is provided a propagated signal carrier carrying signals containing computer-executable instructions that can be read and executed by a computer. The computer-executable instructions are used to execute a method of preserving message causality order. The method comprises the steps of initializing an ordered message channel for a set of causally related messages, starting a transaction for the ordered message channel, retrieving available causally related messages from a message store, grouping the retrieved messages into a bundle, sending the resulting bundle to a recipient, receiving the delivery status of the bundle sent to the recipient, in response to a successful delivery status, committing the transaction for the ordered message channel and in response to a non-successful delivery status, rolling back the transaction for the ordered message channel.

### GRIEF DESCRIPTION OF THE DRAWINGS

An embodiment of the patent disclosure will now be described by way of example only with reference to the following drawings in which:
Figure 1 shows in a schematic diagram an example of a network facilitating wireless component applications;
Figure 2 shows in a flow diagram an example of a wireless component application communication model;
Figure 3 shows in a sequence diagram an example of a communication sequence for the wireless component application communication model of Figure 2;
Figure 4 shows in a detailed component diagram an example of an application gateway server hosting the application gateway shown in Figure 1;
Figure 5 shows in a component diagram an example of a runtime environment structure of the wireless component application;
Figure 6 shows an example of a message format of a message between a server and a device;
Figure 7 shows an example of a message traffic optimization system, in accordance with an embodiment of the present patent disclosure;
Figure 8 shows in a flowchart an example of a method of message traffic optimization, in accordance with an embodiment of the message traffic optimization system;
Figure 9 shows in a flowchart another example of a method of message traffic optimization in accordance with an embodiment of the message traffic optimization system;
Figures 10A and 10B show an example of a message format and queue structure before and after a grouping or bundling of messages, in accordance with an embodiment of the message optimization system;
Figure 11 shows in a flowchart an example of a method of bundling messages, in accordance with an embodiment of the message traffic optimization system;
Figure 12 shows in a flowchart an example of a method of de-bundling a bundled message, in accordance with an embodiment of the message traffic optimization system;
Figure 13 shows in a component diagram an example of an ordered message channel, in accordance with an embodiment of the message traffic optimization system;
Figure 14 shows in a flowchart an example of a method of preserving message causality order via the ordered message channel;
Figure 15 shows in a message protocol stack diagram, another embodiment of the message traffic optimization system, in accordance with an embodiment of the present patent disclosure; and
Figures 16A and 16B show in sequence diagrams an example of a sequence for inbound and a sequence for outbound messages in the message traffic optimization system.

### DETAILED DESCRIPTION OF THE PREFERRED EMBODIMENT

The patent disclosure provides a mechanism to shift from the standard mode of transmitting individual messages into a mode of transmission that is more efficient. Bundling of messages may occur at the application level by a central messaging service.

Advantageously, optimization of the message traffic by reducing message size and the number of messages transmitted saves memory and processor resources. The patent disclosure allows messages to be packaged in an efficient way to a) reduce the amount, in bytes, of data transmitted, and b) reduce the number of messages transmitted so fewer network connections are opened and cumulative round-trip processing time is reduced.

Advantageously, bundling at the application level provides more flexibility to the system designer.

A system and method of the present patent disclosure will now be described with reference to various examples of how the embodiments can best be made and used. For convenience, like reference numerals are used throughout the description and several views of the drawings to indicate like or corresponding parts, wherein the various elements are not necessarily drawn to scale.

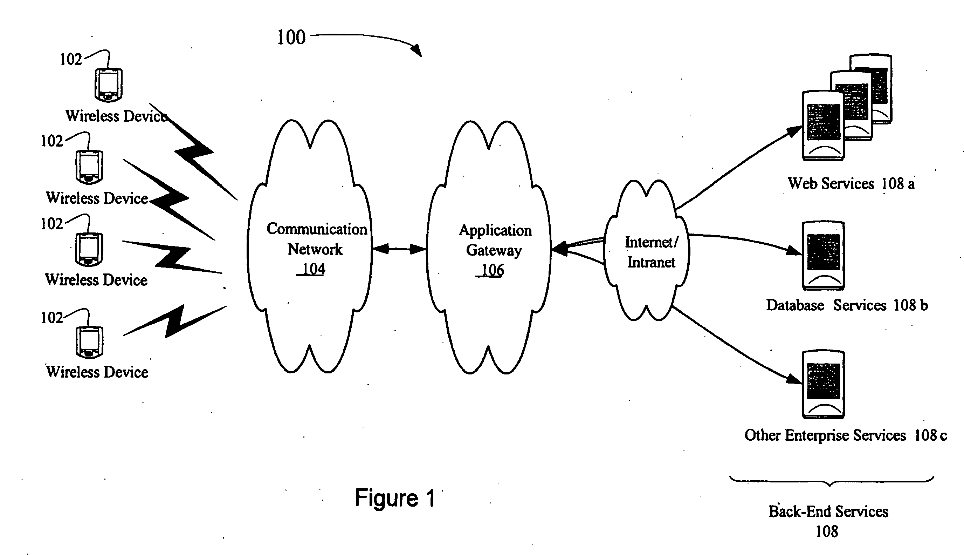

Referring to Figure 1, an example of communication infrastructure is illustrated generally by numeral 100. The communication infrastructure 100 comprises a plurality of wireless devices 102, a communication network 104, an application gateway (AG) 106, and a plurality of back-end servers 108.

The wireless devices 102 are typical personal digital assistants (PDAs), but may include other devices. Each of the wireless devices 102 includes a runtime environment (RE) or equivalent container capable of hosting a plurality of component applications.

The wireless devices 102 are in communication with the AG 106 via the communication network 104. Accordingly, the communication network 104 may include several components such as a wireless network, a relay, a corporate server and/or a mobile data server for relaying data between the wireless devices 102 and the AG 106.

The application gateway (AG) 106 acts as a message broker between the RE on the wireless devices 102 and the back-end servers 108. The AG 106 is further in communication with a plurality of the back-end services 108, such as Web services 108a, database services 108b, as well as other enterprise services 108c, via a suitable link. For example, the AG 106 is connected with the Web services 108a and database services 108b via simple object access protocol (SOAP) and Java database connectivity (JDBC) respectively. Other types of back-end services 108 and their corresponding links can be connected to the AG 106.

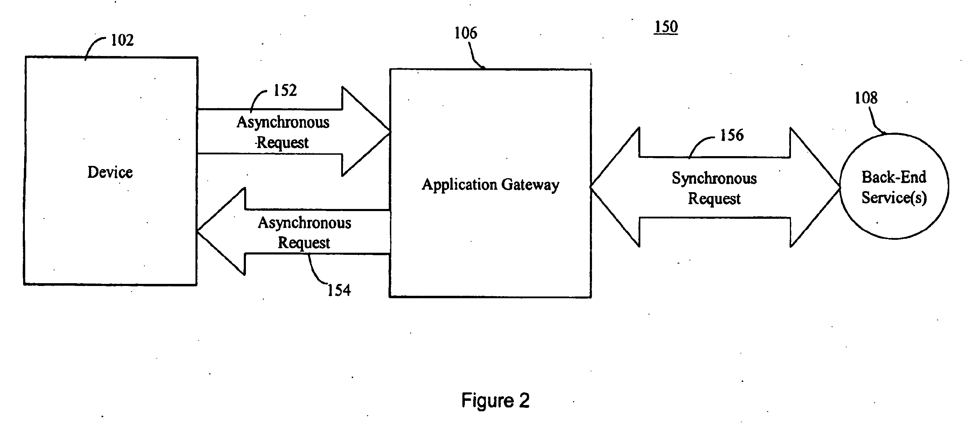

Referring to Figure 2 there is illustrated in a flow diagram an example of a wireless component application communication model 150. From a high level perspective, the overall wireless component application infrastructure 150 includes a wireless component application runtime environment (device RE) running on the device 102 and a wireless component AG 106.

The AG 106 serves as a mediator between a wireless component application (sometimes referred to as application in this disclosure) executed by the RE and one or more back-end services 108 with which the application communicates. Often the back-end service is expected to be a Web service 108a using SOAP over HTTP or HTTPS as transport protocol. As Web services are the most commonly expected back-end service, the term Web service is used interchangeable with back-end throughout this disclosure. However, it is appreciated that other types of back-end services can also be adapted to the disclosure. Figure 2 exemplifies a synchronous link with a back-end service 108. However, it should be appreciated that AG can be in communication with back-end services over asynchronous links.

The wireless component application communication model 150 is based upon an asynchronous messaging paradigm. In this model the AG 106 establishes and mediates a connection between a device 102 and a back-end service 108 to:
1. Achieve greater flexibility in resource management.
2. Provide reliable communication link between the device 102 and the back-end service 108 to handle situations when wireless coverage is unstable.
3. Efficiently distribute workload between the device 102 RE and the AG 106.

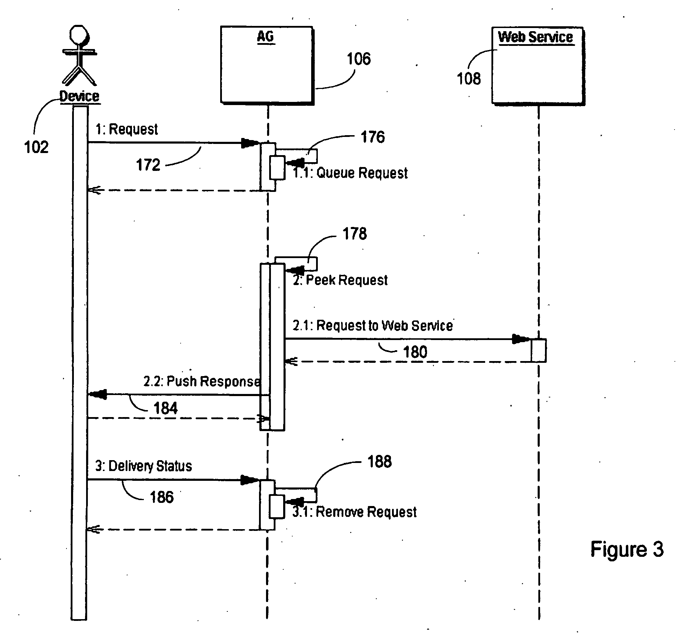

Referring to Figure 3 there is illustrated in a sequence diagram an example of a communication sequence for the wireless component application communication model of Figure 2. The diagram describes the communications sequence between the device 102 and the back-end services(s) 108:
a. Upon receiving a request 172 from the device 102, AG 106 queues the request 176 and releases the connection to the device.
b. Next, AG retrieves the request from the queue 178, pre-processes and forwards it 180 to the Web service 108a through an appropriate communication channel.
c. Any response from the previous request is processed by AG 106 and a response message is sent asynchronously 184 back to the device.
d. The delivery status notification for response 186 is sent by the device 102 or transported to AG 106.

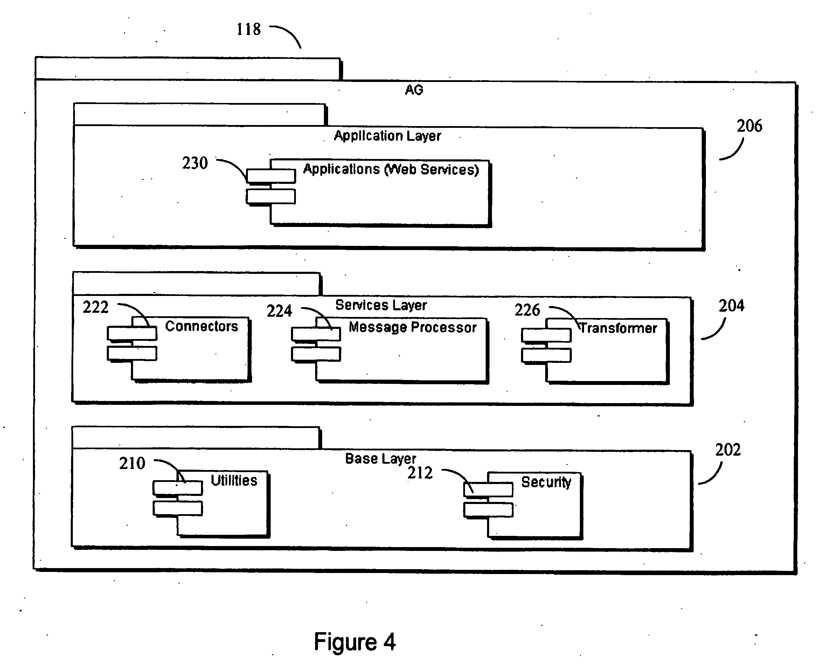

Referring to Figure 4, a detailed view of an example of an AG server 118 of the AG 106 is shown. The AG server 118 includes three layers of service: a base services layer 202, an AG services layer 204 and an application services layer 206.

At the lowest level, the base services layer 202 offers basic, domain-independent system services to other components in higher levels. Thus, for example, all subsystems in the AG services layer 204 and the application services layer 206 can utilize and collaborate with the subsystems in the base services layer 202. In the present embodiment, the base services layer 202 includes a utilities subsystem 210 that contains transport modules, and a security subsystem 212.

The AG services layer 204 provides wireless component application domain-specific services. These services provide efficient message transformation and delivery to back-end servers 108. In the present embodiment, the application gateway services layer 204 includes a connector subsystem 222, a messaging subsystem 224, and a transformation subsystem 226.

The application services layer 206 sits at the top of the architecture and it contains the Web service applications.

A runtime environment framework container is a client-resident container within which applications are executed on a device. The container provides a set of services to the application. These services include asynchronous client-server messaging, etc.

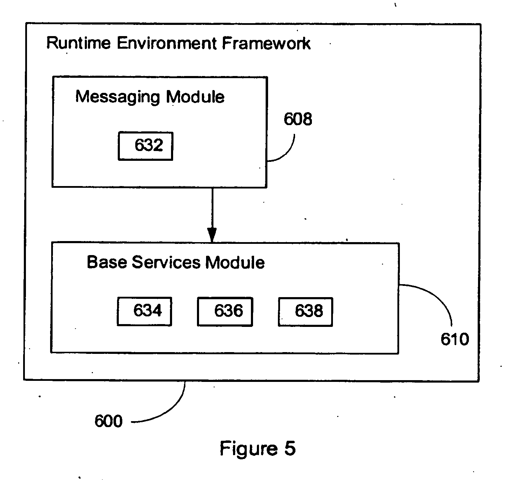

Figure 5 shows an example of a runtime environment framework 600: The runtime environment framework 600 includes a messaging module 608, and a base services module 610. Components may be removed or added to the runtime environment framework 600.

The messaging module 608 includes a messaging service module 632 for message queuing, message (de)compacting, and message distribution.

The base services module 610 includes a persistence service 634 for storing reliable messages (including outgoing messages pending delivery due to out of coverage, and incoming reliable messages pending processing). The base services module 610 also includes a securing service 636 for providing message authentication, integrity, and encryption. The base services module 610 also includes a communication service 638 for sending and receiving messages in and out of the device 102, downloading resources and files from appropriate repositories, and notifying interested RE services about wireless coverage events.

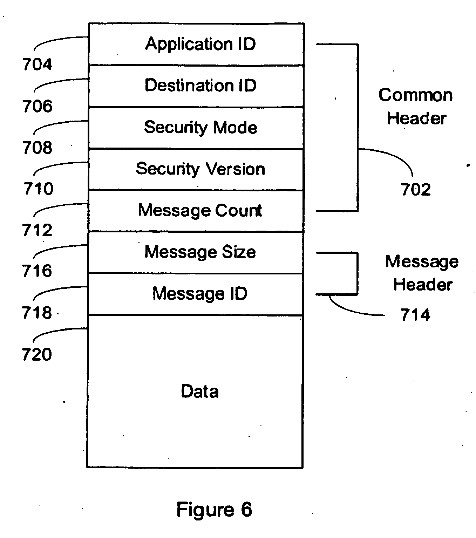

Figure 6 shows an example of a message format 700 of a message between a server and a device. Messages between the server and the device have two header sections 702, 714 and a data 720 section. The first header section, termed the common header 702, contains information that can be shared with other messages if they belong to the same message category. The second header section, termed the message header 714, is specific to the message and contains information such the message identification code (message ID) 718 and the message size 716.

A category can be based on the application generating the message, the security required on the message, the destination of the message, etc., and/or a combination of these. Categories and the fields required in the common header based upon the categories can be predefined. In one example of such predefined categories, messages can be bundle such that the messages:
- belong to the same application (Application ID 704) AND
- go to the same destination, i.e., the same device when sending from the server, and the same server when sending from the device (Destination ID 706) AND
- require the same security during transmission, i.e., unsecured, or just signed, or signed and encrypted (Security Mode 708) AND
- if not unsecured, are signed (and encrypted) with the same security algorithm (Security Version 710)
Variables or constraints may be added or removed to create categories. For example, per-message-reliability mode may be added. Thus a constraint that the messages must have the same reliability mode (Best-Effort, Reliable, etc.) would be added in order to be bundled together (i.e., add a ReliabilityMode field).

The Message Count field 712 in the common header 702 is not a bundling constraint. It is a field populated by the sender, the value being the number of individual messages in the bundle, once a bundle is created. For example, if it is determined that five messages in a queue can be bundled under the same common header 702, in accordance with the four bundling constraints listed above, the Message Count field would be populated with the value '5'. This allows a receiver to easily detect the number of messages that have come in through a bundle.

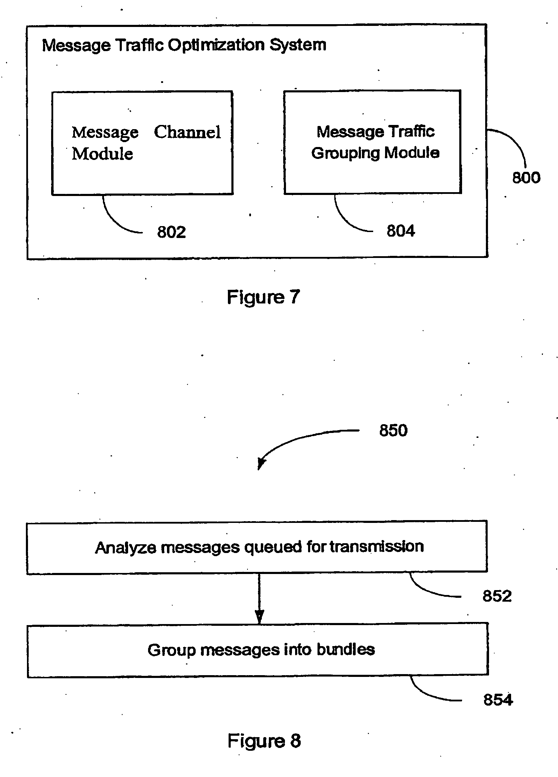

Figure 7 shows an example of a message traffic optimization system 800, in accordance with an embodiment of the present patent disclosure. The message traffic optimization system 800 comprises a message channel module 802 for analyzing messages queued for transmission, and a message grouping module 804 for grouping messages into bundles. Other components added to the message traffic optimization system 800, including a message transport module for delivering (and receiving) processed (bundled or grouped) messages to a destination.

Figure 8 shows in a flowchart an example of a method of message traffic optimization (850), in accordance with an embodiment of the message traffic optimization system 800. The method comprises the steps of analyzing messages queued for transmission (852) and grouping messages into bundles (854). When messages get queued for transmission on the sender's system, device or server, a messaging protocol scans the queue to determine which messages can be grouped together given the category to which they belong.

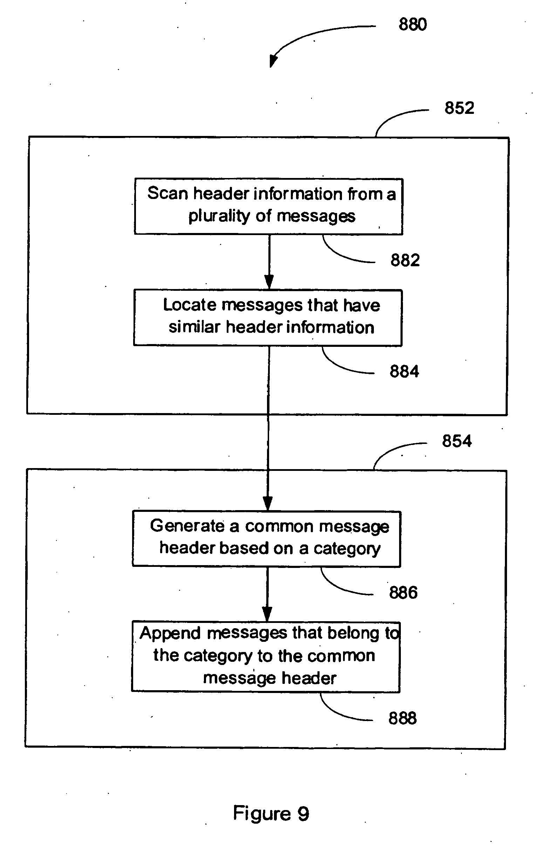

Figure 9 shows in a flowchart another example of a method of message traffic optimization 880 in accordance with an embodiment of the message traffic optimization system 800. The step of analyzing (852) messages queued for transmission (852) includes the steps of scanning header information from a plurality of messages (882) and locating messages that have similar header information (884). As described above, categories may be created and messages grouping to such categories based upon the application ID, destination ID, security mode, security version. The messaging protocol may be implemented in the message channel module 802. The step of grouping (854) messages into bundles includes the steps of generating a common message header (886) based on a category, and appending messages that belong to the category (888) to the common message header. Messages that are grouped together share a common header 702 based upon the category to which they belong. A message group or bundle shares one common header 702 while retaining individual message headers 714.

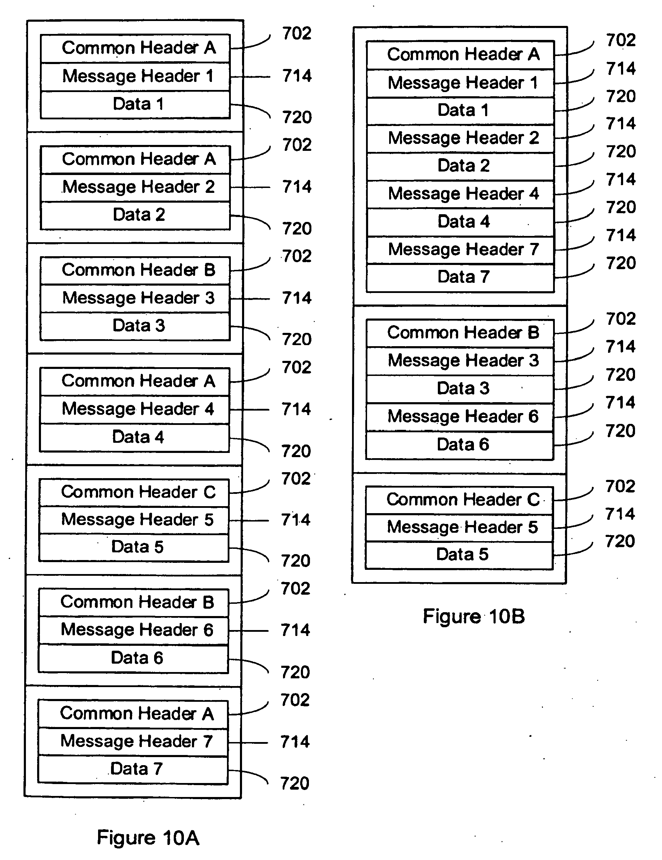

Figures 10A and 10B show an example of a message format and queue structure before (10A) and after (10B) a grouping or bundling of messages, in accordance with an embodiment of the message optimization system 800. In this example, there are seven messages, each having a common header 702, a message header 714, and data 720. Four messages have the same Common Header A; two messages have the same Common Header B; and one message has Common Header C.

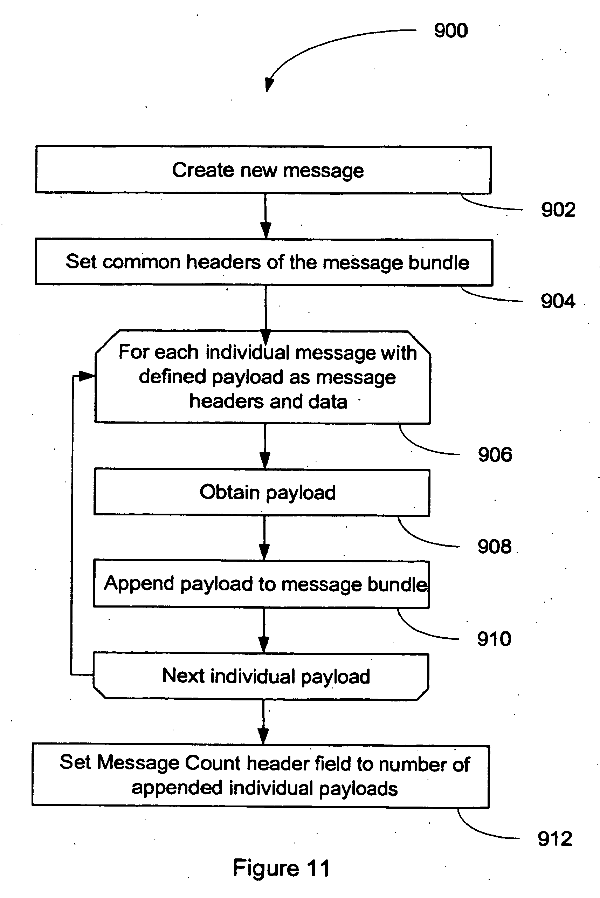

Figure 11 shows in a flowchart an example of a method of bundling messages (900), in accordance with an embodiment of the message traffic optimization system 800. The method (900) begins with creating a new message (902). This new message acts as the message bundle. Next common headers of the message bundle are set (904). The values for the common headers can be obtained from any of the individual messages to be bundled. For each individual message that has a payload defined to be its message headers and data (906), the payload of the individual message is obtained (908) and the payload is appended to the message bundle (910). Message payloads should be delimited by some mechanism. In a preferred embodiment each individual message payload begins with the message header Message Size field that is used to determine the end of the target message payload (and the beginning of the next-in-order message payload, if any. The Message Count header field of the message bundle is then set to indicate the number of individual payloads that have been appended (912).

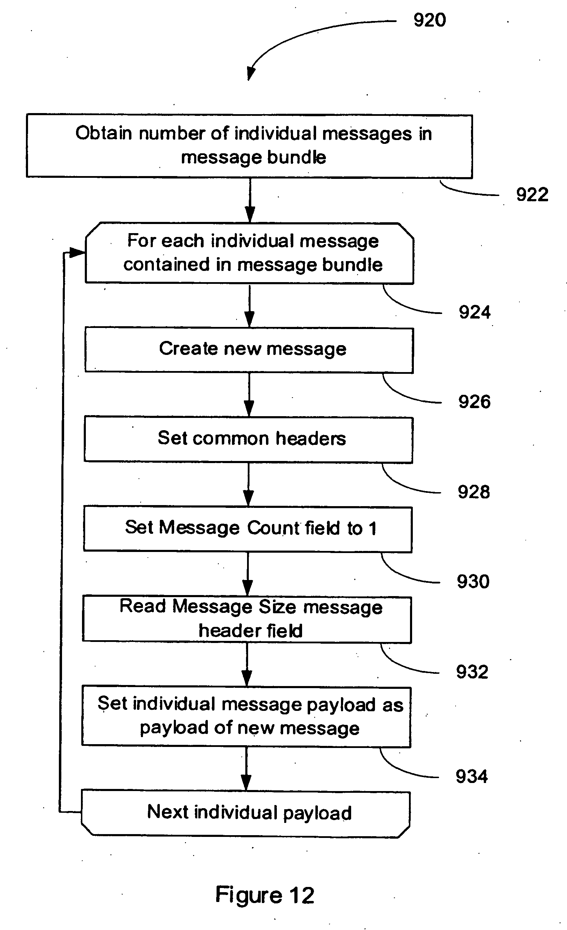

Figure 12 shows in a flowchart an example of a method of de-bundling a bundled message (920), in accordance with an embodiment of the message traffic optimization system 800. The method (920) begins with obtaining the number of individual messages contained in the message bundle from the Message Count header field of the message bundle (922). The payload of the message bundle contains the payload of the individual messages in sequence. Each individual message payload begins with the message header Message Size field, followed by the Message ID and data. The start of the bundle payload is marked at the head of the first individual message payload. For each individual message contained in the bundle (924): a new message is created (926); common headers of the new message is set (928) using the common header values from the message bundle; the Message Count header field of this message is set to 1 (930); the head of the individual message payload is marked and the Message Size message header field value is read (932) for the individual message; using the Message Size value, the required amount of bytes is read (934) from the individual message payload, whereby the Message Size and the subsequent bytes read form the individual message payload; the individual message payload is set as the payload of the new message (936) and the head of the next individual message payload is now marked.

Figure 10B shows an example of the result of the method of bundling messages (900). The queue now contains three bundles instead of seven individual messages. The first bundle contains the messages that shared Common Header A; the second bundle contains the messages that shared Common Header B; and the third bundle contains the messages that shared Common Header C. By grouping messages with the same common header, the amount of data required to be transmitted has been reduced. For example, assume that Common Header A is of size 16 bytes, Common Header B is of size 12 bytes and Common Header C is of size 14 bytes. In this example, three additional Common Headers A (3 x 16 bytes) and one additional Common Header B (1 x 12 bytes) worth of data, totalling 60 bytes, have been saved.

Advantageously, the cumulative message size is reduced. In the example shown in Figures 10A and 10B, the number of bytes transmitted is reduced by 60 bytes by eliminating the individual common headers. The amount of message data stored on either device or server is thus also reduced; this is particularly advantageous for the device since it has limited resources.

Advantageously, the message count is reduced. In the example shown in Figures 10A and 10B, the number of messages transmitted is also decreased from 7 to 3. This requires fewer network connections to be opened, which is an expensive operation on the device. Advantageously, other operations as well, such as processing of the receiver's acknowledgment of a message, persistence of reliable messages, etc., can now be done per message bundle instead of per message.

Advantageously, bundling at the application level provides more flexibility to the system designer. The common header fields can be customized and defined by the designer according to the requirements of the system and are only visible at the application layer. For example, in the example system described above, messages between device and server have a common reader with fields DestinationID, ApplicationID, SecurityMode, and SecurityVersion. These fields form the constraints on messages that are allowed to be bundled together. These header parameters can easily be modified should the requirements of the system change; it is not dependent on the transport or network layer. Only the central Messaging Services at both device and server end, which perform the bundling, have to reflect the change.

The method of bundling messages (900) assumes that messages from one category are not causally related to messages from any other category. Therefore, ordering between message categories is not a restriction. A system and method of enforcing order amongst causally related messages is now briefly described.

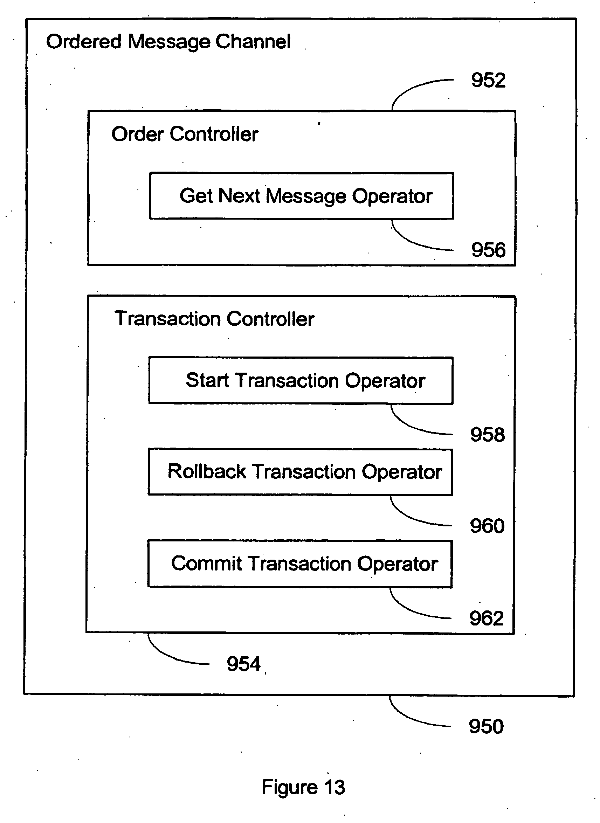

Figure 13 shows in a component diagram an example of an ordered message channel (OMC) 950, in accordance with an embodiment of the message traffic optimization system 800. An OMC 950 with transaction control defines a message-ordering protocol on a set of messages in a (potentially unordered) message store (i.e., a message repository). The set of messages affected by the ordering protocol is defined during the initialization of the OMC 950. The motivation for coupling an OMC 950 with a message store is to allow the retrieval of a message in an ordering that is not supported (or supported inefficiently) by the target message store.

Preferably, the OMC 950 comprises an order controller 952 for retrieving messages in an order and a transaction controller 954 for providing transactional support for the retrieval of messages. The methods for order control and transaction control are use-case specific. Preferably, the following set of operations are supported in OMC 950 implementations:
- Order Controller 952
   ○ *get next message* 956 - retrieves the next-in-order message from the message store.
- Transaction Controller 954
   ○ *start transaction* 958 - Begins a message retrieval transaction. Messages retrieved during this transaction are not eligible for retrieval by any of the concurrent transactions.
   ○ *rollback transaction* 960 - Signals that an error was encountered while processing messages retrieved during the given transaction. Messages retrieved during this transaction should be eligible for retrieval by future transactions.
   ○ *commit transaction -* 962 Signals the successful completion of a given transaction. Messages retrieved during the given transaction are not eligible for retrieval by future transactions.

To preserve ordering, no concurrent transactions should be started for an OMC 950 that operates on a given causally related set of messages. For example, a single thread to retrieve messages from a given OMC 950 may be used, or a synchronization mechanism may be used to ensure that only one thread can have an uncommitted transaction for a given OMC at any given time..

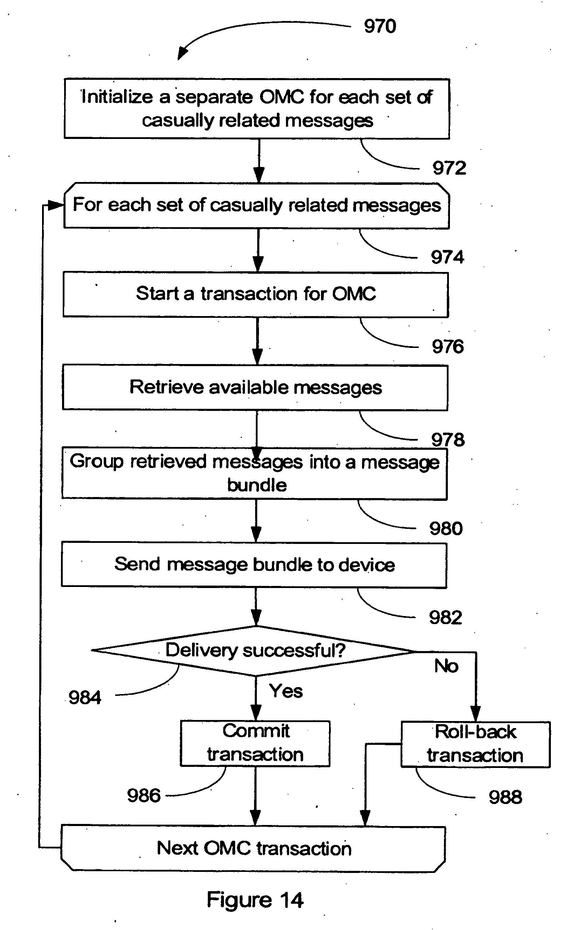

Figure 14 shows in a flowchart an example of a method of preserving message causality order via the OMC 950 (970). For each set of causally related messages a separate OMC is initialized (972). Then for each set of causally related messages (974), a transaction is started (976) for the target OMC 950 and available messages are retrieved (978). The message grouping module 804 is applied on the retrieved messages (980) and a message transport module sends the resulting bundle to the device 102 (982). The delivery status of the bundle as reported by the message transport module may be used to complete the OMC 950 transaction. If the delivery was successful (984), then the transaction is committed (986); otherwise the transaction is rolled back (988). Once a target OMC transaction is complete, the next OMC transaction is started.

Most messaging systems today typically employ the following protocol stack:
application layer
messaging layer
messaging transport layer
In such protocol stacks: the application layer defines message-based user applications; the messaging layer defines quality-of-service guarantees such as reliability and flow control; and the message transport layer defines a protocol that is used to exchange messages between pluralities of network endpoints.

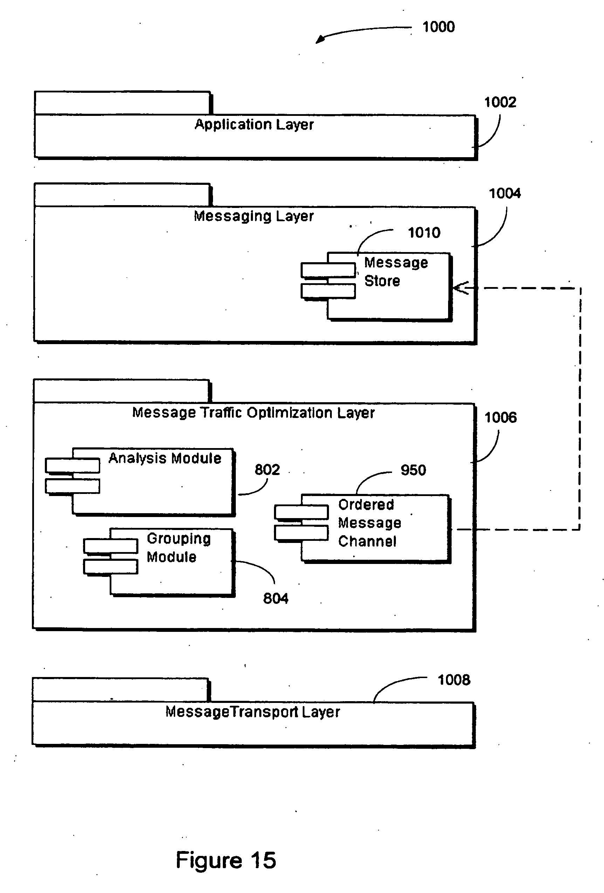

Figure 15 shows in a message protocol stack diagram, another embodiment of the message traffic optimization system 1000 integrated into the following messaging protocol stack:
application layer 1002
messaging layer 1004
messaging traffic optimization layer 1006
messaging transport layer 1008
The messaging layer comprises a message store 1010. The message traffic optimization layer 1006 comprises a grouping module (i.e., the message traffic grouping module) 804 and an OMC 950. The grouping module 804 implements the method of bundling messages 900 and the method of de-bundling a bundled message (920). The OMC 950 provides the facility for preserving ordering amongst causally related messages stored in the message store 1010 defined by the messaging layer 1004. Alternatively, the OMC 950 can be coupled with any other message store 1010 that acts as a repository for outbound messages. The message transport layer 1008 may comprise a message transport module (not shown) for sending and receiving messages.

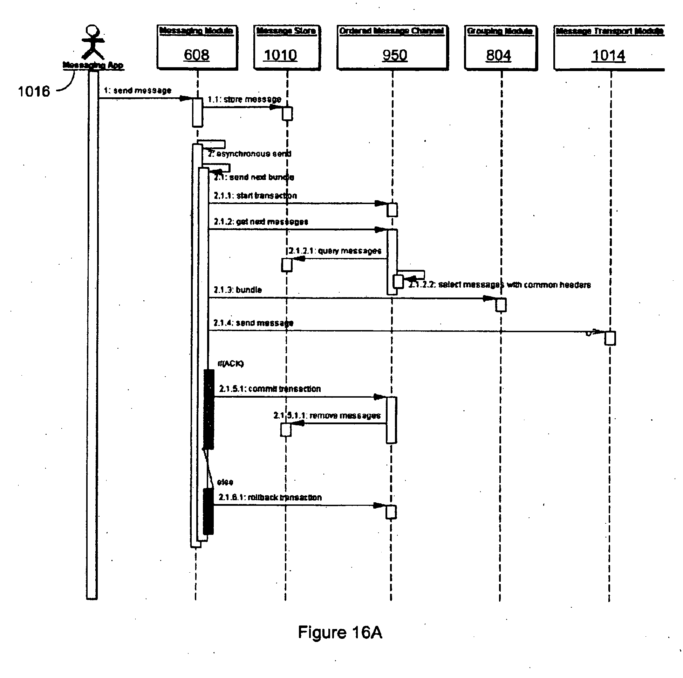

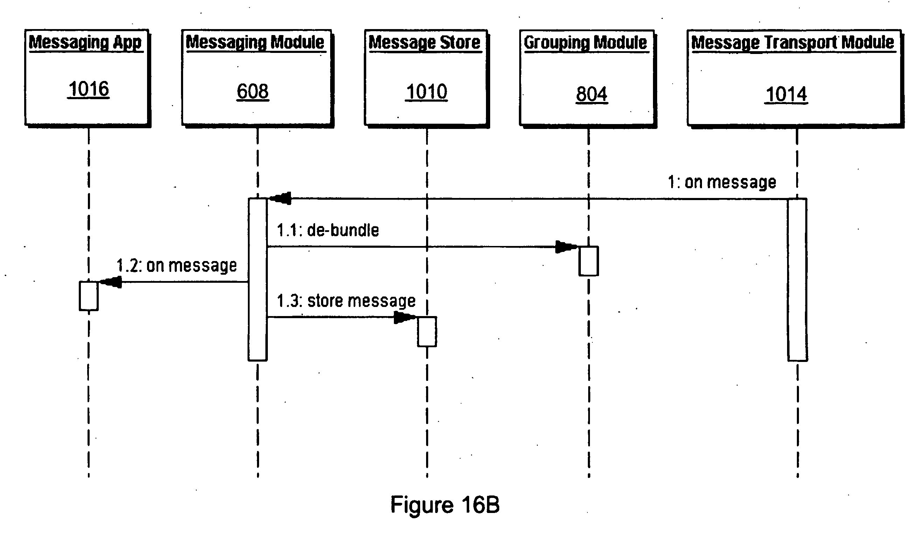

Figures 16A and 16B show in sequence diagrams an example of a sequence for outbound and a sequenced for inbound messages, respectively, in the message traffic optimization system 1000. On the sender side, the sequence begins with a messaging application 1016 requesting the messaging module 608 to send a message on its behalf. The messaging module 608 stores the message in a message store 1010 and allocates a processor thread to serve the send request asynchronously. Once a processor thread is allocated, it starts by starting a transaction with an OMC 950. The processor thread then proceeds to retrieve the next batch of messages and bundle them using the grouping module 804. Finally, the processor thread sends the resulting bundle via the message transport module 1014. Later, the delivery status for the send request is delivered synchronously or asynchronously to the messaging module 608 by the message transport module 1014. If the sent message was delivered successfully (ACK) then the OMC 950 transaction is committed and the sent message is removed from the message store 1010. Otherwise, if the message transport module 1014 failed to deliver the message to destination then the OMC 950 transaction is rolled back and the message is resent at a later time. On the receiver side the sequence (captured in Figure 16B) begins with message transport module 1014 receiving an inbound message. The message transport module 1014 then proceeds to debundle the message using the grouping module 804 and forwarding all the produced messages to the messaging module 608. Finally, the messaging module 608 synchronously forwards the message to the destination messaging application 1016 or stores the messages in a message store 1010 and notifies the messaging application 1016 of available messages.

The message traffic optimization system and methods according to the present patent disclosure may be implemented by any hardware, software or a combination of hardware and software having the above described functions. The software code, either in its entirety or a part thereof, may be stored in a computer-readable memory. Further, a computer data signal representing the software code which may be embedded in a carrier wave may be transmitted via a communication network. Such a computer-readable memory and a computer data signal are also within the scope of the present patent disclosure, as well as the hardware, software and the combination thereof.

## Claims

1. A message traffic optimization system for preserving message causality order, the message traffic optimization system comprising:
a message store (1010) for storing the messages;
an ordered message channel (950) for defining a message-ordering protocol on causally related messages of a single transaction stored in the message store, the order message channel (950) comprising:
an order controller (952) for retrieving causally related messages from the message store in an order the causally related messages defined during the initialization of the ordered message channel; and
a transaction controller (954) for providing transactional support for retrieval of the causally related messages from the message store; and
a message traffic grouping module (804) for grouping the retrieved messages into a bundle.

2. The system as claimed in claim 1, wherein the order controller (952) comprises a get-next-message operator (956) for retrieving a next-in-order message of the causally related messages from the message store.

3. The system as claimed in claim 1, wherein the transaction controller (954) includes:
a start transaction operator (958) for starting a transaction for retrieving causally related messages to be grouped in the bundle;
a rollback transaction operator (960) for signalling errors encountered while processing the bundle; and
a commit-transaction operator (962) for signalling successful processing of the bundle.

4. The system as claimed in claim 3, wherein the commit-transaction operator (962) removes the messages of the bundle from the message store.

5. The system as claimed in claim 1, further comprising a message transport module (1014) for sending the bundle of messages and receiving a delivery status of the bundle.

6. A method of preserving message causality order, the method comprising the steps of:
initializing an ordered message channel (950) for causally related messages of a transaction;
starting the transaction for the ordered message channel (950);
retrieving available causally related messages from a message store (1010);
grouping the retrieved messages into a bundle;
sending the resulting bundle to a recipient;
receiving the delivery status of the bundle sent to the recipient;
in response to a successful delivery status, committing the transaction for the ordered message channel (950); and
in response to a non-successful delivery status, rolling back the transaction for the ordered message channel (950).

7. The method of claim 6, wherein grouping the messages into the bundle includes:
generating a common message header for the bundle from common information in the headers of the causally related messages in the bundle; and
appending a message payload of each of the causally related messages to the bundle.

8. The method of claim 7, wherein grouping the messages into the bundle further includes:
including, with the appended message payload, unique message header information of each of the causally related messages.

9. The method as claimed in claim 8, wherein the order between causally related messages is preserved within the bundle.

10. The method as claimed in claim 9, wherein causally related messages are identified by common message headers.

11. The method as claimed in claim 6, wherein committing the transaction comprises removing the messages of the bundle from the message store (1010).

12. The method as claimed in claim 6, wherein rolling back the transaction comprises by making the messages included in the bundle stored available for retrieval from the message store (1010).

13. A computer-readable medium storing instructions or statements for use in the execution in a computer of a method of preserving message causality order, the method comprising the steps of:
initializing an ordered message channel (950) for causally related messages of a transaction;
starting the transaction for the ordered message channel (950);
retrieving available causally related messages from a message store (1010);
grouping the retrieved messages into a bundle;
sending the resulting bundle to a recipient;
receiving the delivery status of the bundle sent to the recipient;
in response to a successful delivery status, committing the transaction for the ordered message channel (950); and
in response to a non-successful delivery status, rolling back the transaction for the ordered message channel (950).

14. A propagated signal carrier carrying signals containing computer-executable instructions that can be read and executed by a computer, the computer-executable instructions being used to execute a method of preserving message causality order, the method comprising the steps of:
initializing an ordered message channel (950) for causally related messages of a transaction;
starting the transaction for the ordered message channel (950);
retrieving available causally related messages from a message store (1010);
grouping the retrieved messages into a bundle;
sending the resulting bundle to a recipient;
receiving the delivery status of the bundle sent to the recipient;
in response to a successful delivery status, committing the transaction for the ordered message channel (950); and
in response to a non-successful delivery status, rolling back the transaction for the ordered message channel (950).

## Patentansprüche

1. Nachrichtenverkehrsoptimierungssystem zum Wahren einer Nachrichtenkausalitätsreihenfolge, wobei das Nachrichtenverkehrsoptimierungssystem aufweist:
einen Nachrichtenspeicher (1010) zum Speichern der Nachrichten;
einen "geordnete Nachrichten"-Kanal (950) zum Definieren eines Nachrichtenordnungsprotokolls auf kausal-verwandten Nachrichten einer einzelnen Transaktion, die in dem Nachrichtenspeicher gespeichert ist,
wobei der "geordnete Nachrichten"-Kanal (950) aufweist:
eine Reihenfolge-Steuervorrichtung (952) zum Abrufen von kausal-verwandten Nachrichten aus dem Nachrichtenspeicher in einer Reihenfolge, die die kausal-verwandten Nachrichten während der Initialisierung des "geordnete Nachrichten"-Kanals definierten; und
eine Transaktions-Steuervorrichtung (954) zum Vorsehen einer Transaktionsunterstützung zum Abrufen der kausal-verwandten Nachrichten aus dem Nachrichtenspeicher; und
ein Nachrichtenverkehrsgruppierungsmodul (804) zum Gruppieren der abgerufenen Nachrichten in einem Bündel.

2. System gemäß Anspruch 1, wobei die Reihenfolge-Steuervorrichtung (952) einen "Hole nächste Nachricht"-Operator (956) aufweist zum Abrufen einer in der Reihenfolge nächsten Nachricht der kausal-verwandten Nachrichten aus dem Nachrichtenspeicher.

3. System gemäß Anspruch 1, wobei die Transaktions-Steuervorrichtung (954) umfasst:
einen "Start Transaktion"-Operator (958) zum Starten einer Transaktion zum Abrufen von kausal-verwandten Nachrichten zur Gruppierung in dem Bündel;
einen "Transaktion zurücknehmen (Rollback)"-Operator (960) zum Signalisieren von Fehlern, die bei einer Verarbeitung des Bündels auftreten; und
einen "Transaktion durchführen"-Operator (962) zum Signalisieren einer erfolgreichen Verarbeitung des Bündels.

4. System gemäß Anspruch 3, wobei der "Transaktion durchführen"-Operator (962) die Nachrichten des Bündels aus dem Nachrichtenspeicher entfernt.

5. System gemäß Anspruch 1, das weiter ein Nachrichtentransportmodul (1014) aufweist zum Senden des Bündels von Nachrichten und Empfangen eines Lieferstatus des Bündels.

6. Verfahren zum Wahren einer Nachrichtenkausalitätsreihenfolge, wobei das Verfahren die Schritte aufweist:
Initialisieren eines "geordnete Nachrichten"-Kanals (950) für kausal-verwandte Nachrichten einer Transaktion;
Starten der Transaktion für den "geordnete Nachrichten"-Kanal;
Abrufen von verfügbaren kausal-verwandten Nachrichten aus einem Nachrichtenspeicher (1010);
Gruppieren der abgerufenen Nachrichten in einem Bündel;
Senden des resultierenden Bündels an einen Empfänger;
Empfangen des Lieferstatus des Bündels, das an den Empfänger gesendet wurde;
in Reaktion auf einen erfolgreichen Lieferstatus, Durchführen der Transaktion für den "geordnete Nachrichten"-Kanal (950); und
in Reaktion auf einen nicht-erfolgreichen Lieferstatus, Zurücknehmen der Transaktion für den "geordnete Nachrichten"-Kanal (950).

7. Verfahren gemäß Anspruch 6, wobei ein Gruppieren der Nachrichten in das Bündel umfasst:
Erzeugen eines gemeinsamen Nachrichten-Headers für das Bündel aus gemeinsamer Information in den Headern der kausal-verwandten Nachrichten in dem Bündel; und
Anfügen einer Nachrichten-Nutzlast von jeder der kausal-verwandten Nachrichten an das Bündel.

8. Verfahren gemäß Anspruch 7, wobei ein Gruppieren der Nachrichten in das Bündel weiter umfasst:
Aufnehmen, mit der angefügten Nachrichten-Nutzlast, einer eindeutigen Nachrichten-Header-Information von jeder der kausal-verwandten Nachrichten.

9. Verfahren gemäß Anspruch 8, wobei die Reihenfolge zwischen kausal-verwandten Nachrichten in dem Bündel gewahrt wird.

10. Verfahren gemäß Anspruch 9, wobei kausal-verwandte Nachrichten durch gemeinsame Nachrichten-Header identifiziert werden.

11. Verfahren gemäß Anspruch 6, wobei ein Durchführen der Transaktion ein Entfernen der Nachrichten des Bündels aus dem Nachrichtenspeicher (1010) aufweist.

12. Verfahren gemäß Anspruch 6, wobei ein Zurücknehmen der Transaktion aufweist ein gespeichertes Verfügbar machen der Nachrichten, die in dem Bündel enthalten sind, zum Abrufen aus dem Nachrichtenspeicher (1010).

13. Computer-lesbares Medium, das Anweisungen oder Angaben zur Verwendung bei der Ausführung eines Verfahrens zum Wahren einer Nachrichtenkausalitätsreihenfolge in einem Computer speichert, wobei das Verfahren die Schritte aufweist:
Initialisieren eines "geordnete Nachrichten"-Kanals (950) für kausal-verwandte Nachrichten einer Transaktion;
Starten der Transaktion für den "geordnete Nachrichten"-Kanal (950);
Abrufen von verfügbaren kausal-verwandten Nachrichten aus einem Nachrichtenspeicher (1010);
Gruppieren der abgerufenen Nachrichten in einem Bündel;
Senden des resultierenden Bündels an einen Empfänger;
Empfangen des Lieferstatus des Bündels, das an den Empfänger gesendet wurde;
in Reaktion auf einen erfolgreichen Lieferstatus, Durchführen der Transaktion für den "geordnete Nachrichten"-Kanal (950); und
in Reaktion auf einen nicht-erfolgreichen Lieferstatus, Zurücknehmen der Transaktion für den "geordnete Nachrichten"-Kanal (950).

14. Träger für ein verbreitetes Signal, der Signale überträgt, die Computerausführbare Anweisungen enthalten, die durch einen Computer gelesen und ausgeführt werden können, wobei die Computer-ausführbaren Anweisungen verwendet werden, um ein Verfahren zum Wahren einer Nachrichtenkausalitätsreihenfolge auszuführen, wobei das Verfahren die Schritte aufweist:
Initialisieren eines "geordnete Nachrichten"-Kanals (950) für kausal-verwandte Nachrichten einer Transaktion;
Starten der Transaktion für den "geordnete Nachrichten"-Kanal (950);
Abrufen von verfügbaren kausal-verwandten Nachrichten aus einem Nachrichtenspeicher (1010);
Gruppieren der abgerufenen Nachrichten in einem Bündel;
Senden des resultierenden Bündels an einen Empfänger;
Empfangen des Lieferstatus des Bündels, das an den Empfänger gesendet wurde;
in Reaktion auf einen erfolgreichen Lieferstatus, Durchführen der Transaktion für den "geordnete Nachrichten"-Kanal (950); und
in Reaktion auf einen nicht-erfolgreichen Lieferstatus, Zurücknehmen der Transaktion für den "geordnete Nachrichten"-Kanal (950).

## Revendications

1. Système d'optimisation du trafic de messages, destiné à préserver l'ordre de causalité des messages, le système d'optimisation du trafic de messages comprenant :
une mémoire de messages (1010), destinée à stocker les messages ;
un canal de messages ordonnés (950), destiné à définir un protocole de classement de messages, sur des messages liés causalement appartenant à une transaction unique et stockés dans la mémoire de messages, le canal de messages ordonnés (950) comprenant :
un contrôleur d'ordre (952), destiné à extraire des messages liés causalement de la mémoire de messages, dans un ordre que les messages liés causalement ont défini pendant l'initialisation du canal de messages ordonnés ; et
un contrôleur de transactions (954), destiné à fournir une assistance transactionnelle pour l'extraction des messages liés causalement de la mémoire de messages ; et
un module de regroupement de trafic de messages (804), destiné à regrouper les messages extraits en un faisceau.

2. Système selon la revendication 1, dans lequel le contrôleur d'ordre (952) comprend un opérateur d'obtention du message suivant (956), destiné à extraire de la mémoire de messages le message suivant dans l'ordre parmi les messages liés causalement.

3. Système selon la revendication 1, dans lequel le contrôleur de transactions (954) comprend :
un opérateur de lancement de transaction (958), destiné à lancer une transaction d'extraction de messages liés causalement à regrouper dans le faisceau ;
un opérateur d'annulation de transaction (960), destiné à signaler des erreurs rencontrées dans le traitement du faisceau ; et
un opérateur de validation de transaction (962), destiné à signaler le succès du traitement du faisceau.

4. Système selon la revendication 3, dans lequel l'opérateur de validation de transaction (962) supprime les messages du faisceau dans la mémoire de messages.

5. Système selon la revendication 1, comprenant en outre un module de transport de messages (1014) destiné à émettre le faisceau de messages et à recevoir un avis de livraison du faisceau.

6. Procédé destiné à préserver l'ordre de causalité des messages, le procédé comprenant les étapes consistant à :
initialiser un canal de messages ordonnés (950) pour des messages liés causalement d'une transaction ;
lancer la transaction pour le canal de messages ordonnés (950) ;
extraire des messages liés causalement disponibles dans une mémoire de messages (1010) ;
regrouper les messages extraits dans un faisceau ;
envoyer le faisceau obtenu à un destinataire ;
recevoir l'avis de livraison du faisceau envoyé au destinataire ;
en réponse à un avis de livraison positif, valider la transaction pour le canal de messages ordonnés (950) ; et
en réponse à un avis de livraison négatif, annuler la transaction pour le canal de messages ordonnés (950).

7. Procédé selon la revendication 6, dans lequel l'étape de regroupement des messages dans le faisceau comprend les étapes consistant à :
produire un en-tête commun de message pour le faisceau, à partir d'informations communes dans les en-têtes des messages liés causalement se trouvant dans le faisceau ; et
concaténer au faisceau une charge utile de messages composée de chacun des messages liés causalement.

8. Procédé selon la revendication 7, dans lequel l'étape de regroupement des messages dans le faisceau comprend l'étape consistant à :
inclure avec la charge utile de messages concaténée, des informations individuelles d'en-tête de message de chacun des messages liés causalement.

9. Procédé selon la revendication 8, dans lequel l'ordre entre les messages liés causalement est préservé à l'intérieur du faisceau.

10. Procédé selon la revendication 9, dans lequel les messages liés causalement sont identifiés par des en-têtes de message communs.

11. Procédé selon la revendication 6, dans lequel l'étape de validation de la transaction comprend la suppression des messages du faisceau dans la mémoire de message (1010).

12. Procédé selon la revendication 6, dans lequel l'étape d'annulation de la transaction comprend le fait de rendre les messages du faisceau qui sont mémorisés à nouveau accessibles à l'extraction dans la mémoire de messages (1010).

13. Support lisible par ordinateur, contenant des instructions ou des énoncés à utiliser pour l'exécution sur un ordinateur d'un procédé destiné à préserver un ordre de causalité des messages, le procédé comprenant les étapes consistant à :
initialiser un canal de messages ordonnés (950) pour des messages liés causalement d'une transaction ;
lancer la transaction pour le canal de messages ordonnés (950) ;
extraire d'une mémoire de messages (1010) des messages liés causalement disponibles;
regrouper les messages extraits dans un faisceau ;
envoyer le faisceau obtenu à un destinataire ;
recevoir l'avis de livraison du faisceau envoyé au destinataire ;
en réponse à un avis de livraison positif, valider la transaction pour le canal de messages ordonnés (950) ; et
en réponse à un avis de livraison négatif, annuler la transaction pour le canal de messages ordonnés (950).

14. Porteuse de signaux se propageant en transportant des signaux contenant des instructions exécutables par ordinateur, qui peuvent être lues et exécutées par un ordinateur, les instructions exécutables par ordinateur étant utilisées pour l'exécution d'un procédé destiné à préserver un ordre de causalité des messages, le procédé comprenant les étapes consistant à :
initialiser un canal de messages ordonnés (950) pour des messages liés causalement d'une transaction ;
lancer la transaction pour le canal de messages ordonnés (950) ;
extraire des messages liés causalement disponibles dans une mémoire de messages (1010) ;
regrouper les messages extraits dans un faisceau ;
envoyer le faisceau obtenu à un destinataire ;
recevoir l'avis de livraison du faisceau envoyé au destinataire ;
en réponse à un avis de livraison positif, valider la transaction pour le canal de messages ordonnés (950) ; et
en réponse à un avis de livraison négatif, annuler la transaction pour le canal de messages ordonnés (950).
